# FASCICULE DE BREVET EUROPEEN

(11) **EP 0 263 031 B1**
(45) Date de publication et mention de la délivrance du brevet: **07.12.1994**
(21) Numéro de dépôt: 87402180.1
(22) Date de dépôt: 30.09.1987
(51) Int. Cl.: G01N 21/73

(54) **Dispositif d'analyse d'éléments par spectrométrie à plasma inductif engendré par de l'air**
Induktiv gekoppelte Luft-Plasma-Vorrichtung für die spektrometrische Analyse von Elementen
Inductively coupled air-plasma apparatus for the spectrometric analysis of elements

(30) Priorité: 03.10.1986 FR 8613837
(43) Date de publication de la demande: 06.04.1988
(73) Titulaire: COMMISSARIAT A L'ENERGIE ATOMIQUE, 75015 Paris Cédex 15 (FR)
(72) Inventeur: Durr, René Clet, F-73200 Albertville (FR); Rozain, Jean-Pierre, F-21121 Fontaine Les Dijon (FR)
(74) Mandataire: Dubois-Chabert, Guy

(56) Documents cités:
- GB-A- 1 109 602
- US-A- 4 482 246
- PATENT ABSTRACTS OF JAPAN, vol. 7, no. 184 (P-216)[1329], 13 août 1983, page 159 P 216; & JP-A-58 87 446
- APPLIED SPECTROSCOPY, vol. 39, no. 2, mars-avril 1985, pages 226-230, Society for Applied Spectroscopy, Maryland, US; Y.K. ZHANG et al.: "Evaluation of microwave-induced air-plasma as an excitation source"
- APPLIED SPECTROSCOPY, vol. 37, no. 2, mars-avril 1983, pages 101-105, Society for Applied Spectroscopy, Maryland, US; J.P. KEILSOHN et al.: "The use of a microarc atomizer for sample introduction into an inductively coupled plasma"

## Description

La présente invention concerne un dispositif d'analyse d'éléments par spectrométrie à plasma inductif engendré par de l'air. Elle s'applique notamment à l'analyse d'éléments tel que le béryllium, susceptibles d'être contenus dans l'air et plus généralement, à l'analyse d'éléments succeptibles d'être présents dans des aérosols, des liquides ou des gaz.

Par "analyse" on entend une détection éventuellement accompagnée d'un dosage et l'élément peut être un solide (par exemple des particules solides contenues dans de l'air), un liquide ou un gaz (par exemple le gaz carbonique de l'air).

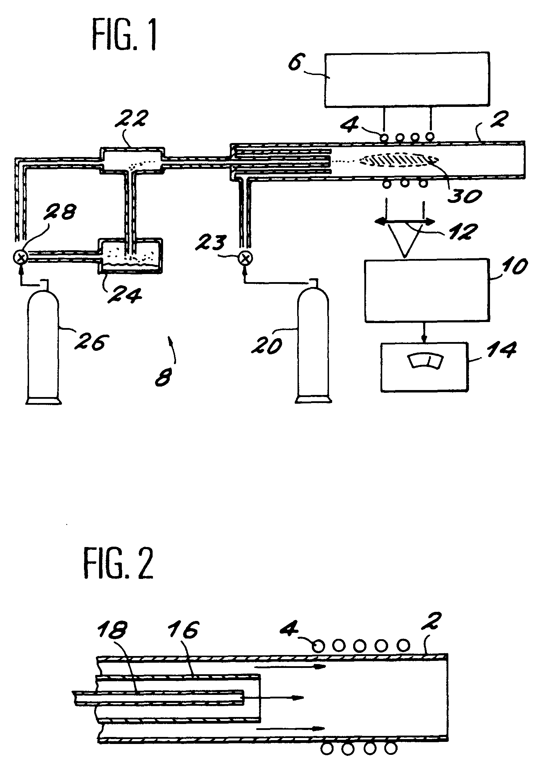

On connaît déjà un dispositif d'analyse d'éléments par spectrométrie à plasma. Ce dispositif, qui est schématiquement représenté sur la figure 1, comprend:
- un tube 2 fait d'un matériau réfractaire,
- une source d'excitation, constituée d'une bobine inductrice 4 entourant une portion centrale du tube 2 et alimentée par un générateur haute fréquence 6,
- un système d'injection double 8 permettant l'injection d'argon en tant que gaz plasmagène ainsi que l'injection centrale d'une solution liquide (ou de vapeurs d'une solution) contenant l'élément à analyser, et
- un spectrophotomètre 10 permettant l'analyse de la lumière émise par le plasma formé dans le tube 2, dans la portion centrale de celui-ci, et la mesure de l'intensité d'une raie caractéristique d'émission de l'élément à analyser, mesure représentative de la concentration de cet élément dans la solution.

La lumière émise par le plasma est collectée par une lentille 12 qui focalise cette lumière sur l'entrée du spectrophotomètre et ce dernier est relié à un moyen de mesure tel qu'un galvanomètre 14, permettant la mesure de ladite intensité.

Le tube 2 est ouvert à une extrémité et fermé à son autre extrémité. Comme on le voit sur la figure 2, un tube intermédiaire 16, coaxial au tube 2, s'étend à l'intérieur de celui-ci entre ladite extrémité fermée et la bobine 4. Le tube intermédiaire 16, dont le diamètre est bien entendu inférieur à celui du tube 2, a une extrémité ouverte et une autre extrémité fermée coïncidant avec l'extrémité fermée du tube 2.

Un tube d'injection 18, dont le diamètre est inférieur à celui du tube intermédiaire 16, traverse, parallèlement à l'axe du tube 2 et de façon étanche, l'extrémité fermée du tube intermédiaire 16 et se termine sensiblement au niveau de l'extrémité ouverte du tube 16.

Les moyens d'injection 8 comprennent une bouteille 20 d'argon comprimé, communiquant de façon étanche, par l'intermédiaire d'une vanne 23 et au voisinage de l'extrémité fermée du tube 2, avec l'espace compris entre ce tube 2 et le tube intermédiaire 16.

Les moyens d'injection 8 comprennent également, en vue de l'injection de la solution, le tube d'injection 18, une chambre 22 raccordée à l'extrémité du tube 18, qui ne se trouve pas à l'intérieur du tube 2, un nébuliseur 24 commandé par un générateur d'ultrasons non représenté et communiquant avec la chambre 22, ce nébuliseur étant destiné à contenir la solution à injecter, une bouteille d'argon comprimé 26 qui communique, d'une part, avec le nébuliseur 24 et, d'autre part, avec la chambre 22, grâce à un organe 28 qui permet d'envoyer l'argon de la bouteille 26 vers la chambre 22 et vers le nébuliseur 24.

Lorsque le générateur d'ultrasons fonctionne et que l'argon de la bouteille 26 parvient à la chambre 22, de fines gouttelettes de solution, formées par les ultrasons dans le nébuliseur 24 et atteignant la chambre 22, sont entraînées par l'argon dans le tube d'injection 18.

Un plasma 30 contenant l'élément à analyser est alors formé, grâce à l'argon provenant de la bouteille 20, dans la portion du tube 2 qui est entourée par les spires de la bobine 4.

La lumière émise par le plasma est analysée par le spectrophotomètre 10.

On voit donc que le fonctionnement du dispositif connu, schématiquement représenté sur la figure 1, nécessite l'injection d'argon en tant que gaz plasmagène, pour former et entretenir le plasma, ainsi que l'injection de la solution à analyser dans le canal central de la torche à plasma, ce canal central étant le tube d'injection 18 et la torche comprenant les tubes 2, 16 et 18.

Le dispositif représenté sur la figure 1 présente l'inconvénient de ne pas permettre l'analyse directe d'un élément, tel que le béryllium, susceptible d'être contenu dans l'air. En effet, pour analyser le béryllium contenu dans l'air, il faut d'abord piéger ce béryllium sur un filtre et réaliser une solution à partir du béryllium piégé sur le filtre, l'analyse du béryllium étant ainsi effectuée a posteriori grâce au dispositif représenté sur la figure 1.

La présente invention a pour objet un dispositif d'analyse d'un élément comprenant, de façon connue, des moyens de création, dans un tube, d'un plasma contenant l'élément, ces moyens de création comprenant des moyens d'induction d'un champ électromagnétique dans une portion du tube, dispositif qui remédie à l'inconvénient mentionné plus haut, tout en augmentant, par rapport aux dispositifs connus, le temps de présence de l'élément à analyser dans ladite portion et donc la sensibilité du dispositif.

On connaît aussi, par le document US-A- 4 482 246, un dispositif d'analyse d'éléments par spectrométrie à plasma inductif qui peut être engendré par de l'air.

De façon précise, la présente invention a pour objet un dispositif d'analyse d'un élément conformément à la revendication 1.

Du fait que le dispositif objet de l'invention utilise l'air en tant que gaz plasmagène, ce dispositif permet l'analyse directe d'un élément, le béryllium par exemple, susceptible d'être contenu dans l'air.

Le dispositif objet de l'invention peut donc fonctionner uniquement avec de l'air, sans adjonction d'aucun autre gaz plasmagène, meme lors de l'allumage du plasma.

En outre, la présente invention permet de s'affranchir de la nécessité d'injecter une solution contenant un élément à analyser dans le canal central d'une torche à plasma.

On simplifie ainsi l'analyse d'un élément et l'on peut analyser un polluant de l'air avec une quantité d'air prélevé importante. En outre, du fait de la faible section transverse de ladite pièce, au moins du côté de ladite portion, on facilite l'allumage et le maintien en forme du plasma et surtout on prolonge le temps de présence de l'élément à analyser dans ladite portion, ce qui permet d'exciter une quantité suffisante de cet élément en vue de l'analyser.

Dans une première réalisation particulière, les moyens d'entrée d'air comprennent en outre des moyens d'arrivée d'air entre la pièce et le tube, du côté de ladite extrémité et la section de la pièce comptée transversalement à l'axe du tube, est plus faible du côté de ladite portion qu'en ladite extrémité.

Dans une deuxième réalisation particulière, le tube est ouvert en ladite extrémité de celui-ci, cette dernière étant munie d'un cône de prélèvement, et la pièce a une extrémité qui est située en dehors du tube, du côté de ladite extrémité du tube, et qui s'étend dans ce tube jusqu'au voisinage de ladite portion, l'extrémité de la pièce située en dehors du tube ayant un profil, par exemple en forme d'ogive, apte à minimiser la rétention des particules susceptibles d'être contenues dans l'air, dans le cône de prélèvement.

Dans cette deuxième réalisation particulière, les moyens d'entrée d'air peuvent comprendre en outre des ailettes qui relient la pièce au tube et qui sont prévues pour provoquer un écoulement hélicoïdal de l'air.

De préférence, les moyens de circulation comprennent des moyens d'aspiration d'air à l'autre extrémité du tube. Dans le cas où l'élément à analyser se présente sous la forme d'un aérosol, le dispositif objet de l'invention comprenant par ailleurs des moyens de prélèvement de cet aérosol, un tel fonctionnement en dépression - Les moyens assurant l'écoulement de l'air se trouvent en aval de la torche à plasma, c'est-à-dire de la partie du tube où se forme le plasma- permet de minimiser la rétention des particules de l'aérosol dans ces moyens de prélèvement.

Si le problème de rétention est considéré comme négligeable, on peut disposer les moyens assurant l'écoulement de l'air en amont de la torche à plasma : les moyens d'entrée d'air peuvent alors être munis de moyens prévus pour pousser l'air dans le tube.

Selon un mode de réalisation particulier du dispositif objet de l'invention, les moyens de création du plasma comprennent des moyens d'allumage de ce plasma, ces moyens d'allumage comprenant une tige parallèle à l'axe du tube et mobile parallèlement à cet axe.

De tels moyens de création du plasma sont particulièrement bien adaptés aux deux réalisations particulières indiquées ci-dessus.

Dans une autre réalisation particulière de l'invention, les moyens d'allumage du plasma pourraient comprendre des moyens pour créer une étincelle dans ladite portion du tube (dans laquelle est induit le champ électromagnétique).

Enfin, selon un autre mode de réalisation particulier du dispositif objet de l'invention, les moyens de création du plasma comprennent en outre des moyens d'injection, dans le tube et suivant l'axe de celui-ci, d'un gaz porteur de gouttelettes contenant l'élément.

Dans ce cas, le dispositif objet de l'invention permet non seulement d'analyser un élément susceptible d'être contenu dans l'air mais encore d'analyser un élément contenu dans une solution liquide.

La présente invention sera mieux comprise à la lecture de la description qui suit, d'exemples de réalisation donnés à titre purement indicatif et nullement limitatif, en référence aux dessins annexés sur lesquels :
- la figure 1 est une vue schématique d'un dispositif d'analyse d'éléments par spectrométrie à plasma inductif, connu dans l'état de la technique, et a déjà été décrite,
- la figure 2 est une vue d'une partie du dispositif représenté sur la figure 1, et a déjà été décrite,
- la figure 3 est une vue schématique d'un mode de réalisation particulier du dispositif objet de l'invention,
- la figure 4 est une vue schématique et partielle d'une variante de réalisation du dispositif représenté sur la figure 3,
- la figure 5 est une vue schématique d'une première réalisation particulière d'une entrée d'air faisant partie du dispositif représenté sur la figure 3,
- la figure 6 est une vue schématique d'une variante de réalisation de l'entrée d'air représentée sur la figure 5, permettant également l'injection d'aérosols dans le dispositif représenté sur la figure 3,
- la figure 7 est une vue schématique d'une deuxième réalisation particulière de ladite entrée d'air, et
- la figure 8 est une vue schématique d'une variante de réalisation de l'entrée d'air représentée sur la figure 7, permettant également l'injection d'aérosols dans le dispositif représenté sur la figure 3.

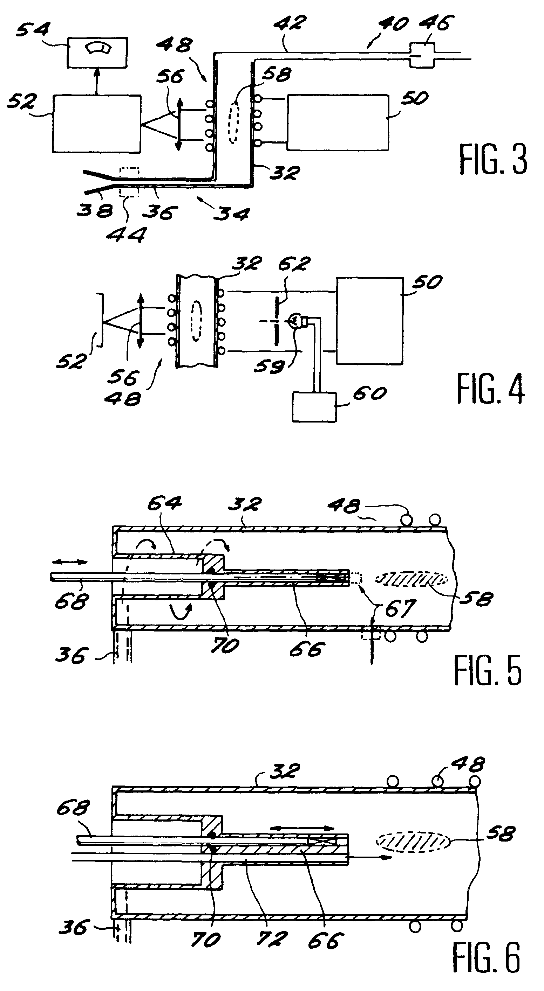

Sur la figure 3, on a représenté schématiquement un mode de réalisation particulier du dispositif objet de l'invention. Dans cette réalisation particulière, le dispositif comprend :
- un tube extérieur 32 fait d'un matériau réfractaire tel que la silice ou l'alumine,
- des moyens 34 d'entrée d'air dans le tube 32, ces moyens 34 pouvant comporter un tube 36 par exemple en silice, dont une extrémité est raccordée de façon étanche, comme on le verra par la suite (figures 5 et 6), à une extrémité du tube 32, tandis que l'autre extrémité du tube 36 est munie d'un cône 38 de prélèvement de l'air,
- des moyens 40 d'aspiration de l'air contenu dans le tube 32, ces moyens 40 comprenant un tube 42 par exemple en silice et raccordé de façon étanche, par une extrémité, à l'autre extrémité du tube 32, la sortie de l'air du tube 32 se faisant par exemple de façon tangentielle (après refroidissement par passage dans un réfrigérant non représenté, si nécessaire), les moyens 40 comprenant en outre une pompe 46 prévue pour aspirer l'air à l'autre extrémité du tube 42,
- une bobine 48 dont les spires entourent une portion centrale du tube 32 et qui est alimentée par un générateur de haute fréquence 50,
- un spectrophotomètre 52 muni de moyens d'affichage de mesures, par exemple constitués par un galvanomètre 54, et
- une lentille 56 prévue pour focaliser la lumière produite par un plasma susceptible d'être formé dans le tube 32, sur un diaphragme d'entrée du spectrophotomètre 52.

La bobine 48, associée au générateur 50, a pour fonction de créer et d'entretenir ledit plasma engendré par de l'air qui circule dans le tube 32.

L'angle d'ouverture du cône de prélèvement 38 peut être calculé en fonction du diamètre des particules susceptibles d'être détectées par le dispositif objet de l'invention, afin de minimiser la rétention de ces particules dans le cône 38.

Lorsque la pompe 46 fonctionne, l'air aspiré par le cône 38 circule dans le tube 32. Le fonctionnement du générateur 50 permet alors la création d'un plasma 58 dans le tube 32, dans la portion de celui-ci qui est entourée par les spires de la bobine 48. La lumière émise par le plasma est alors détectée par le spectrophotomètre 52.

Lorsque l'on travaille en "émission", un élément présent dans l'air aspiré contribue à la formation du plasma et une lumière caractéristique dudit élément est alors émise par ce plasma et analysée par le spectrophotomètre.

Dans une variante de réalisation (figure 4), on effectue des mesures en "absorption" et l'on ajoute alors au dispositif représenté sur la figure 3 une lampe 59 contenant un élément identique à celui qui est supposé contenu dans l'air et que l'on souhaite analyser (par exemple une lampe dont le filament comporte de béryllium si l'on souhaite analyser le béryllium contenu dans l'air), ladite lampe étant alimentée par une source de courant 60. On munit également le dispositif d'un diaphragme 62 disposé entre la lampe 59 et le tube 32. La lampe 59, l'ouverture de son diaphragme 62 et l'ouverture du diaphragme du spectrophotomètre sont alignées suivant un diamètre du tube 32, la lampe étant à l'opposé de la lentille 56 par rapport à ce tube 32, et les spires de la bobine 48 sont suffisamment espacées pour laisser passer la lumière diaphragmée de la lampe 59.

En ce qui concerne la circulation d'air dans le tube 32 (figure 3), la pompe 46 pourrait être supprimée (le tube 42 étant alors ouvert en son autre extrémité) et l'on monterait alors sur le tube 36, à la suite du cône 38, un ventilateur 44 prévu pour pousser l'air dans le tube 32. Mais cette réalisation (utilisation du ventilateur) ne présente vraiment d'intérêt que pour l'analyse de gaz ou éventuellement de liquides.

Sur la figure 5, on a représenté schématiquement une première réalisation des moyens 34, cette réalisation permettant une entrée d'air tangentielle dans le tube 32.

Dans cette première réalisation particulière, un cylindre creux ou plein 64, par exemple en silice, ayant un diamètre inférieur, de préférence légèrement inférieur, au diamètre intérieur du tube 32, est monté à l'intérieur de ce tube 32, coaxialement à celui-ci. Une extrémité du cylindre 64 est raccordée à l'extrémité du tube 32, du côté de laquelle se fait l'entrée d'air.

Un autre cylindre creux ou plein 66, par exemple en silice, de diamètre inférieur à celui du cylindre 64 (voir figure 5), s'étend dans le tube 32 suivant l'axe de ce dernier, entre l'autre extrémité du cylindre 64 et la portion du tube 32 entourée par la bobine 48, une extrémité du cylindre 66 étant soudée à l'autre extrémité du cylindre 64.

De préférence, le diamètre du cylindre 66 est inférieur à environ 0,2 fois le diamètre (intérieur) du tube 32.

Ladite extrémité du tube 36 est raccordée tangentiellement par soudage au tube 32 et communique avec l'espace compris entre ce tube 32 et le cylindre 64, du côté de l'extrémité du tube 32.

L'ensemble formé par le tube 32 et les cylindres 64 et 66 est conçu pour qui l'air ne fuie pas à l'extérieur du tube 32 lorsqu'il y rentre. Par exemple, lorsque le cylindre 64 est creux, ses extrémités sont respectivement raccordées de façon étanche, par soudage par exemple, auxdites extrémités du tube 32 et du cylindre 66, que ce dernier soit creux ou plein, l'autre extrémité du cylindre 66 étant fermée lorsque ce cylindre 66 est creux.

Lorsque le cylindre 64 est plein, ladite extrémité de ce cylindre 64 est raccordée de façon étanche à ladite extrémité du tube 32 et l'autre extrémité du cylindre 64 est fixée au cylindre 66 que celui-ci soit creux ou plein.

On peut aussi réaliser un tube 32 fermé en ladite extrémité de celui-ci et fixer respectivement les extrémités du cylindre 64 à cette extrémité fermée et à ladite extrémité du cylindre 66.

L'air, qui entre tangentiellement dans le tube 32, a une trajectoire hélicoïdale le long du cylindre 64 et, selon les lois de la mécanique des fluides, le cylindre 66, de diamètre inférieur à celui du cylindre 64, permet de ralentir la partie centrale du flux d'air et donc d'obtenir un temps de présence important de l'élément contenu dans l'air (par exemple sous forme de particules solides telles que des particules de beryllium), dans la portion centrale du tube 32, ce qui permet d'exciter une quantité suffisante d'élément pour l'analyse de celui-ci.

L'allumage du plasma peut être obtenu au moyen d'une tige 68 par exemple en graphite, en alumine ou en tungstène, qui traverse les cylindres 64 et 66 parallèlement à l'axe du tube 32 et qui est déplaçable parallèlement à cet axe depuis l'extérieur du tube 32. Un joint d'étanchéité 70 est prévu à l'endroit du cylindre 64 où pénètre la tige 68 (endroit situé du côté de l'entrée d'air), dans le cas où le cylindre 64 est plein. Lorsque le cylindre 64 est creux, le joint d'étanchéité 70 peut être placé au niveau de la liaison étanche entre les cylindres 64 et 66. Lorsque le tube 32 est fermé en ladite extrémité de celui-ci le joint d'étanchéité peut être placé en cette extrémité.

L'allumage du plasma est obtenu en sortant du cylindre 66 l'extrémité de la tige 68 qui s'y trouve et qui peut comporter un renflement, pour placer cette extrémité dans la portion entourée par la bobine 48, la tige 68 étant rentrée lorsque le plasma est allumé.

Dans une variante de réalisation, on pourrait utiliser, pour allumer le plasma, un moyen 67 de création d'étincelles dans la portion du tube 32 dans laquelle est induit le champ électromagnétique.

Sur la figure 6, on a représenté schématiquement une variante de réalisation du dispositif représenté sur la figure 5, permettant non seulement l'analyse de l'air mais encore l'analyse d'un aérosol provenant d'une solution liquide. Dans le dispositif représenté sur la figure 6, les cylindres 64 et 66 sont non seulement traversés par la tige 68 parallèlement à l'axe du tube 32 mais encore par un tube 72 d'injection de l'aérosol également parallèle à l'axe du tube 32, la traversée de ce tube 72 étant étanche grâce à un joint d'étanchéité non représenté ou à une soudure étanche d'une portion du pourtour du tube 72 au cylindre 66 par exemple.

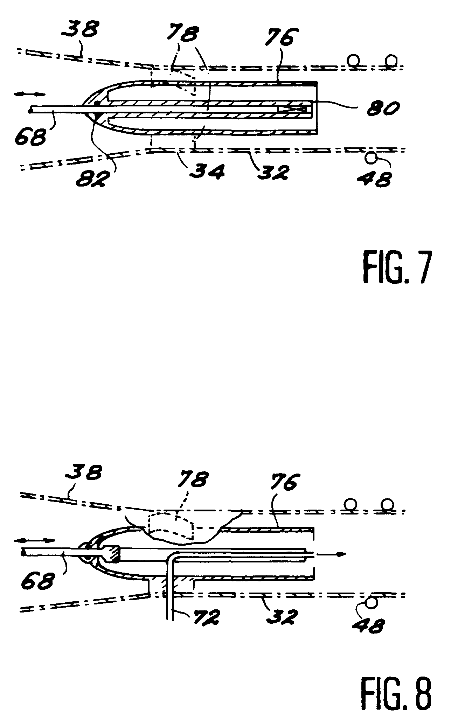

Sur la figure 7, on a représenté schématiquement une deuxième réalisation des moyens 34, cette réalisation permettant l'entrée d'air dans le dispositif parallèlement à l'axe du tube 32.

Dans cette réalisation particulière, l'extrémité du tube 32, en laquelle se fait l'entrée d'air, est ouverte et le cône de prélèvement 38 est directement raccordé à cette extrémité du tube 32.

Le dispositif représenté sur la figure 7 comprend également une pièce centrale 76 par exemple en silice. Une extrémité de cette pièce 76 se trouve dans le cône de prélèvement 38. L'autre extrémité de la pièce 76 se trouve au voisinage de l'extrémité de la bobine 48, extrémité faisant face au cône de prélèvement 38. La pièce 76 s'étend parallèlement à l'axe du tube 32. Elle est en outre fixée à celui-ci.

L'extrémité de la pièce 76 qui se trouve dans le cône de prélèvement 38, est profilée (elle a par exemple la forme d'une ogive) de façon à minimiser la rétention des particules susceptibles d'être contenues dans l'air, dans le cône de prélèvement 38. La pièce 76 épouse, dans sa partie non profilée, la forme d'un cylindre de révolution dont le diamètre est inférieur à environ 0,2 fois le diamètre intérieur du tube 32 et a été exagéré sur la figure 7 (comme sur la figure 8) pour une plus grande clarté de ces figures. Les particules contenues dans l'air sont fortement ralenties lorsqu'elles arrivent dans la portion du tube 32, qui est entourée par les spires de la bobine.

La fixation de la pièce 76 au tube 32 peut être effectuée par l'intermédiaire de petites ailettes 78 reliant une portion du pourtour de la pièce 76, située au voisinage de la jonction entre le cône de prélèvement et le tube 32. Les ailettes peuvent avoir une forme apte à communiquer au flux d'air entrant un mouvement hélicoïdal. La pièce 76, par exemple en silice, peut être pleine ou creuse.

Une tige 68 d'allumage du plasma peut être prévue dans le dispositif représenté sur la figure 7. Cette tige 68 est déplaçable, de l'extérieur du dispositif, parallèlement à l'axe du tube 32 et traverse la pièce 76. Lorsque cette dernière est pleine, un conduit peut être prévu pour la traversée de la tige 68. Lorsque la pièce 76 est creuse, on peut par exemple prévoir pour cette traversée, un tube interne 80 par exemple en silice, de diamètre approprié au déplacement de la tige 68 (et inférieur au diamètre de la partie cylindrique de la pièce 76), le tube 80 étant soudé à l'extrémité profilée de la pièce 76.

Un joint d'étanchéité 82 est prévu à l'endroit où la tige 68 pénètre dans la pièce 76 par la partie profilée de cette dernière.

Dans une variante de réalisation, permettant l'injection d'un aérosol provenant d'une solution, dans le dispositif (figure 8), un tube 72 d'injection de l'aérosol traverse de façon étanche le tube 32 (grâce à une soudure du pourtour du tube 72 au tube 32 à l'endroit où le tube 72 pénètre dans ce dernier), la traversée ayant par exemple lieu au niveau des ailettes 78. Le tube 72 pénètre dans le tube 32 perpendiculairement à l'axe de ce dernier puis se coude pour se diriger suivant l'axe 32 et s'arrêter sensiblement au niveau de l'extrémité de la pièce 76, qui se trouve dans le tube 32.

La tige d'allumage 68 peut être également utilisée dans le dispositif représenté sur la figure 8. A cet effet, la pièce 76 est par exemple creuse et la partie de la tige 68, qui se trouve dans la pièce 76, est creuse et fendue longitudinalement de sorte que cette partie fendue peut se déplacer en s'appuyant sur la partie du tube 72 qui s'étend suivant l'axe du tube 32.

En variante, la pièce 76 pourrait être pleine (le tube 72 la traversant bien entendu encore et débouchant en l'extrémité de la pièce 76, qui se trouve dans le tube 32) et la tige 68 coulisserait dans la pièce 76, parallèlement à l'axe du tube 32 mais non suivant cet axe.

Par ailleurs, la tige 68 (figures 6 et 8) pourrait être remplacée par d'autres moyens d'allumage de plasma, connus dans l'état de la technique.

En outre, l'extrémité du tube 72 (figures 6, 8), qui est située en dehors du tube 32, peut être raccordée à un système d'injection d'aérosols, du genre de celui qui comprend les organes 22 à 28 de la figure 1.

Bien entendu, pour les réalisations particulières comportant la tige 68 et/ou le tube 72, on choisit en conséquence les diamètres des pièces référencées 64, 66, 76 et 80.

## Revendications

1. Dispositif d'analyse d'un élément, ce dispositif comprenant :
- un tube (32),
- des moyens (34, 40, 48, 68, 72) de création, dans le tube, d'un plasma contenant l'élément, ces moyens de création comprenant des moyens (48) d'induction d'un champ électromagnétique dans une portion du tube, et des moyens (40) de circulation d'air dans le tube, cet air étant destiné à engendrer le plasma,
- des moyens (52, 54) d'analyse spectrométrique de la lumière issue du plasma,
les moyens (40) de circulation comprenant des moyens d'entrée d'air (34) à une extrémité du tube (32), dispositif caractérisé en ce que ces moyens d'entrée d'air (34) comportent une pièce (64, 66, 76) le long de laquelle circule l'air, qui s'étend dans le tube (32) à partir de ladite extrémité jusqu'au voisinage de ladite portion et dont la section extérieure comptée transversalement à l'axe du tube (32) ne dépasse pas le vingtième de la section intérieure du tube (32), au moins du côté de ladite portion, de façon à ralentir l'écoulement de l'air dans une zone qui s'étend le long de l'axe du tube (32), qui a de petites dimensions comptées transversalement à cet axe et qui est situé dans ladite portion du tube (32), l'air étant destiné à engendrer le plasma sans apport initial d'aucun autre gaz plasmagène.

2. Dispositif selon la revendication , caractérisé en ce que les moyens d'entrée d'air (34) comprennent en outre des moyens d'arrivée d'air (36, 38) entre la pièce (64, 66) et le tube (32), du côté de ladite extrémité et en ce que la section de la pièce comptée transversalement à l'axe du tube (32), est plus faible du côté de ladite portion qu'en ladite extrémité.

3. Dispositif selon la revendication 1, caractérisé en ce que le tube (32) est ouvert en ladite extrémité de celui-ci, cette dernière étant munie d'un cône de prélèvement (38), et en ce que la pièce (76) a une extrémité située en dehors du tube, du côté de ladite extrémité du tube, et qui s'étend dans ce tube jusqu'au voisinage de ladite portion, l'extrémité de la pièce (76) située en dehors du tube (32) ayant un profil, par exemple en forme d'ogive, apte à minimiser la rétention des particules susceptibles d'être contenues dans l'air, dans le cône de prélévement.

4. Dispositif selon la revendication 3, caractérisé en ce que les moyens d'entrée d'air (34) comprennent en outre des ailettes (78) qui relient la pièce (76) au tube (32) et qui sont prévues pour provoquer un écoulement hélicoïdal de l'air.

5. Dispositif selon l'une quelconque des revendications 1 à 4, caractérisé en ce que les moyens (40) de circulation comprennent des moyens (46) d'aspiration d'air à l'autre extrémité du tube (32).

6. Dispositif selon la revendication 5, caractérisé en ce que l'élément à analyser se présente sous la forme d'un aérosol et en ce que le dispositif comprend en outre des moyens (38) de prélèvement de cet aérosol.

7. Dispositif selon l'une quelconque des revendications 1 à 4, caractérisé en ce que les moyens d'entrée d'air (34) sont munis de moyens (44) prévus pour pousser l'air dans le tube.

8. Dispositif selon l'une quelconque des revendications 1 à 7, caractérisé en ce que les moyens (34, 40, 48, 68, 72) de création du plasma comprennent des moyens (68) d'allumage de ce plasma, ces moyens d'allumage comprenant une tige (68) parallèle à l'axe du tube (32) et mobile parallèlement à cet axe.

9. Dispositif selon l'une quelconque des revendications 1 à 7, caractérisé en ce que les moyens de création du plasma comprennent des moyens (67) d'allumage de ce plasma, ces moyens d'allumage comprenant des moyens (67) pour créer une étincelle dans ladite portion du tube (32).

10. Dispositif selon l'une quelconque des revendications 1 à 9, caractérisé en ce que les moyens de création du plasma (34, 40, 48, 68, 72) comprennent en outre des moyens (72) d'injection, dans le tube (32) et suivant l'axe de celui-ci, d'un gaz porteur de gouttelettes contenant l'élément à analyser.

## Patentansprüche

1. Vorrichtung für die Analyse eines Elements, umfassend:
- ein Rohr (32),
- Einrichtungen (34, 40, 48, 68, 72) zur Erzeugung eines das Element enthaltenden Plasmas in dem Rohr, wobei diese Erzeugungseinrichtungen Induktionseinrichtungen (48) eines elektromagnetischen Feldes in einem Abschnitt des Rohrs umfassen, und Einrichtungen (40) für die Luftzirkulation in dem Rohr, wobei diese Luft dazu bestimmt ist, das Plasma zu erzeugen,
- Einrichtungen (52, 54) für die spektrometrische Analyse des von dem Plasma ausgehenden Lichts,
wobei die Zirkulationseinrichtungen (40) an einem Ende des Rohrs (32) Lufteintrittseinrichtungen (34) umfassen,
Vorrichtung, **dadurch gekennzeichnet**, daß die Lufteintrittsvorrichtungen (34) ein Teil (64, 66, 76) enthalten, an dem die Luft entlangströmt, das sich in dem Rohr (32) erstreckt von dem genannten Ende bis in die Nähe des genannten Abschnitts und dessen Außenquerschnitt, quer zur Achse des Rohrs (32) betrachtet, ein Zwanzigstel des Innenquerschnitts des Rohrs (32) nicht überschreitet, wenigstens auf der Seite des genannten Abschnitts, um den Luftstrom zu verlangsamen in einer Zone, die sich längs der Achse des Rohrs (32) erstreckt, die, quer zu dieser Achse betrachtet, kleine Dimensionen aufweist und die sich in dem genannten Abschnitt des Rohrs (32) befindet, wobei die Luft dazu bestimmt ist, das Plasma zu erzeugen, ohne Initialzufuhr irgend eines anderen plasmaerzeugenden Gases.

2. Vorrichtung nach Anspruch 1, dadurch gekennzeichnet, daß die Lufteintrittseinrichtungen (34) außerdem Luftzuführungseinrichtungen (36, 38) umfassen zwischen dem Teil (64, 66) und dem Rohr (32), auf der Seite des genannten Endes, und dadurch, daß der Querschnitt des Teils, quer zur Achse des Rohrs (32) betrachtet, kleiner ist auf der Seite des genannten Abschnitts als in dem genannten Ende.

3. Vorrichtung nach Anspruch 1, dadurch gekennzeichnet, daß das Rohr (32) in dem genannten Ende offen ist, wobei in dem genannten Ende von diesem dieses letztere versehen ist mit einem Entnahmekonus (38), und dadurch, daß das das Teil (76) ein Ende hat, das sich außerhalb des Rohrs befindet, auf der Seite des genannten Endes des Rohrs, und das sich in dem Rohr bis in die Nähe des genannten Abschnitts erstreckt, wobei das Ende des Teils (76), das sich außerhalb des Rohrs (32) befindet, z.B. ein spitzbogenförmiges Profil aufweist, um in dem Entnahmekonus die Zurückhaltung von Partikeln zu minimieren, die enthalten sein könnten in der Luft.

4. Vorrichtung nach Anspruch 3, dadurch gekennzeichnet, daß die Lufteintrittseinrichtungen (34) außerdem Rippen (78) umfassen, die das Teil (76) mit dem Rohr (32) verbinden, und die vorgesehen sind, um einen spiralförmigen Luftstrom zu bewirken.

5. Vorrichtung nach einem der Ansprüche 1 bis 4, dadurch gekennzeichnet, daß die Zirkulationseinrichtungen (40) am anderen Ende des Rohrs (32) Luftansaugeinrichtungen (46) umfassen.

6. Vorrichtung nach Anspruch 5, dadurch gekennzeichnet, daß das zu analysierende Element sich in Form eines Aerosols präsentiert, und dadurch, daß die Vorrichtung außerdem Entnahmeeinrichtungen (38) dieses Aerosols umfaßt.

7. Vorrichtung nach einem der Ansprüche 1 bis 4, dadurch gekennzeichnet, daß die Lufteintrittseinrichtungen (34) mit Einrichtungen (44) versehen sind, vorgesehen um die Luft in das Rohr zu drücken.

8. Vorrichtung nach einem der Ansprüche 1 bis 7, dadurch gekennzeichnet, daß die Einrichtungen (34, 40, 48, 68, 72) zur Plasmaerzeugung Zündeinrichtungen (68) dieses Plasmas enthalten, wobei diese Zündeinrichtungen eine Stange (68) umfassen, parallel zur Achse des Rohrs (32) und parallel zu dieser Achse beweglich.

9. Vorrichtung nach einem der Ansprüche 1 bis 7, dadurch gekennzeichnet, daß die Einrichtungen zur Plasmaerzeugung Zündeinrichtungen (67) dieses Plasmas enthalten, wobei diese Zündeinrichtungen Einrichtungen (67) zum Erzeugen eines Funkens in dem genannten Abschnitt des Rohrs (32) umfassen.

10. Vorrichtung nach einem der Ansprüche 1 bis 9, dadurch gekennzeichnet, daß die Plasmaerzeugungseinrichtungen (34, 40, 48, 68, 72) außerdem Einrichtungen (72) umfassen, zum Einspritzen, in das Rohr (32) und in dessen Achsrichtung, eines Trägergases von Tröpfchen, die das zu analysierende Gas enthalten.

## Claims

1. Device for analysing an element, said device comprising a tube (32), means (34,40,48,68,72) for creating within said tube a plasma containing the element, said creating means comprising means (48) for inducing an electromagnetic field in a portion of the tube and means (40) for circulating air in said tube, said air being intended to produce the plasma, means (52,54) for the spectrometric analysis of the light from the plasma, the circulating means (40) comprising means (34) for introducing air at one end of the tube (32), characterized in that the air introduction means (34) incorporate a part (64,66,76) along which circulates the air, which extends into the tube (32) from said end up to the vicinity of said portion and whereof the external section, transversely with respect to the axis of the tube (32), does not exceed 1/20 of the internal section of the tube (32), at least on the side of the said portion, so as to slow down the air flow in a zone extending along the axis of the tube (32), which has small dimensions considered transversely to said axis and which is located in said portion of the tube (32), the air being intended to produce the plasma without any initial supply other than the plasma producing gas.

2. Device according to claim 1, characterized in that the air introduction means (38) also incorporate air supply means (36,38) between the part (64,66) and the tube (32), on the side of said end, and in that the section of the part, considered transversely to the axis of the tube (32), is smaller on the side of said portion than at said end.

3. Device according to claim 1, characterized in that the tube (32) is open at said end thereof and the latter is provided with a sampling cone (38) and in that the part (76) has an end located outside the tube, on the side of said end of the tube, and which extends into the tube up to the vicinity of said portion, the end of the part (76) being positioned outside the tube (32) and having an e.g. ogival profile able to minimize the retention of particles liable to be contained in the air in the sampling cone.

4. Device according to claim 3, characterized in that the air introduction means (34) also comprise fins (78) connecting the part (76) to the tube (32) and which bring about a helical flow of the air.

5. Device according to any one of the claims 1 to 4, characterized in that the circulation means (40) incorporate air suction means (46) at the other end of the tube (32).

6. Device according to claim 5, characterized in that the element to be analysed is in the form of an aerosol and that the device also comprises means (38) for sampling said aerosol.

7. Device according to any one of the claims 1 to 4, characterized in that the air introduction means (34) are provided with means (44) for forcing the air into the tube.

8. Device according to any one of the claims 1 to 7, characterized in that the plasma creating means (34,40,48,68,72) incorporate means (68) for igniting said plasma, said ignition means comprising a rod (68) parallel to the axis of the tube (32) and mobile parallel to said axis.

9. Device according to any one of the claims 1 to 7, characterized in that the plasma creation means incorporate means (67) for igniting said plasma, said ignition means comprising means (67) for creating a spark in said portion of the tube (32).

10. Device according to any one of the claims 1 to 9, characterized in that the plasma creation means (34,40,48,68,72) also comprise means (72) for injecting into the tube (32) and following the axis thereof a droplet carrier gas containing the element to be analysed.
